# EUROPÄISCHE PATENTSCHRIFT

(11) **EP 1 541 962 B1**
(45) Veröffentlichungstag und Bekanntmachung des Hinweises auf die Patenterteilung: **27.12.2006**
(21) Anmeldenummer: 04026937.5
(22) Anmeldetag: 12.11.2004
(51) Int. Cl.: G01B 21/04

(54) **Verfahren zum Bestimmen von Raumkoordinaten eines Messpunktes sowie entsprechendes Koordinatenmessgerät**
Method of determining the coordinates of a measuring point and corresponding coordinate measuring machine
Procédé pour déterminer les coordonnées d'un point et appareil de mesure de coordonnées

(30) Priorität: 11.12.2003 DE 10358480
(43) Veröffentlichungstag der Anmeldung: 15.06.2005
(73) Patentinhaber: Carl Zeiss Industrielle Messtechnik GmbH, 73447 Oberkochen (DE)
(72) Erfinder: Peter, Heinz, Dipl.-Ing., 89079 Ulm (DE); Puntigam, Walter, 89520 Heidenheim (DE); Höll, Michael, Dipl.-Ing., 73430 Aalen (DE); Aubele, Eugen, Dipl.-Ing., 89558 Böhmenkirch (DE); Hitzler, Stefan, 89520 Heidenheim (DE)
(74) Vertreter: Duhme, Torsten

(56) Entgegenhaltungen:
- DE-A1- 10 131 160
- DE-A1- 19 720 049

## Beschreibung

Die vorliegende Erfindung betrifft ein Verfahren zum Bestimmen von Raumkoordinaten eines Messpunktes an einem Messobjekt, mit den Schritten:
- Anordnen eines Messobjekts in einem Messvolumen,
- Verfahren eines Tastkopfes in dem Messvolumen an eine Raumposition,
- Antasten des Messpunktes mit einem am Tastkopf angeordneten Taststift,
- Bereitstellen von ersten, dem Taststift zugeordneten Kalibrierdaten, und
- Bestimmen der Raumkoordinaten des Messpunktes abhängig von der Raumposition des Tastkopfes und abhängig von den Kalibrierdaten, wobei der Tastkopf wahlweise automatisiert oder manuell an die Raumposition verfahren wird.

Die Erfindung betrifft ferner ein Koordinatenmessgerät zum Bestimmen von Raumkoordinaten eines Messpunktes an einem Messobjekt, das in einem Messvolumen angeordnet ist, mit einem Tastkopf, der innerhalb des Messvolumens verfahrbar ist, mit einem an dem Tastkopf angeordneten Taststift zum Antasten des Messpunktes, mit einer Steuereinrichtung zum Verfahren des Tastkopfes an eine Raumposition, mit einem Speicher zum Abspeichern von ersten, dem Taststift zugeordneten Kalibrierdaten, und mit einer Messeinrichtung, die dazu ausgebildet ist, die Raumkoordinaten des Messpunktes abhängig von der Raumposition des Tastkopfes und abhängig von den Kalibrierdaten zu bestimmen, wobei die Steuereinrichtung wahlweise einen ersten Betriebsmodus zum automatisierten Verfahren des Tastkopfes oder einen zweiten Betriebsmodus zum manuellen Verfahren des Tastkopfes bereitstellt.

Ein solches Verfahren und ein entsprechendes Koordinatenmessgerät sind auf Grund ihrer Verwendung bekannt.

Gattungsgemäße Koordinatenmessgeräte werden beispielsweise verwendet, um die Raumform eines Messobjektes kontinuierlich oder stellenweise zu überprüfen. Ein typischer Anwendungsfall ist die Qualitätskontrolle von maschinell hergestellten Werkstücken. Die gattungsgemäßen Koordinatenmessgeräte besitzen einen Tastkopf, der über eine Verschiebemechanik im Raum verfahren werden kann. An dem Tastkopf werden Taststifte befestigt, mit denen ein gewünschter Messpunkt angetastet wird. Nach dem Antasten oder im Moment des Antastens werden die jeweils aktuellen Raumkoordinaten des Tastkopfes und - bei sogenannten messenden Tastköpfen - auch die Auslenkungen des Taststiftes bestimmt. Aus den erhaltenen Messwerten lässt sich die Raumkoordinate des angetasteten Messpunktes berechnen.

Da die Genauigkeit der erhaltenen Raumkoordinaten u.a. von dem speziell verwendeten Taststift beeinflusst wird, ist es bekannt, zu jedem Taststift Kalibrierdaten bereitzustellen, die bei der Berechnung der Raumkoordinaten berücksichtigt werden (vgl. beispielsweise DE 101 31 160 A1). Die Kalibrierdaten werden beispielsweise gewonnen, indem vor der Durchführung der eigentlichen Messaufgabe ein Prüfkörper mit bekannten geometrischen Abmessungen "vermessen" wird, wobei die dabei erfassten Abweichungen für eine spätere Fehlerkorrektur aufgezeichnet und gespeichert werden.

Die modernen gattungsgemäßen Koordinatenmessgeräte ermöglichen es, wiederkehrende Messaufgaben automatisiert durchzuführen, indem der Tastkopf über einen geeigneten Steuerrechner programmgesteuert verfahren wird. Diese automatische Steuerung wird in der Fachsprache häufig als CNC-Betrieb bezeichnet (CNC: Computerized Numerical Control). Darüber hinaus ist es bei solchen Koordinatenmessgeräten häufig jedoch auch möglich, den Tastkopf manuell an einen Messpunkt zu verfahren. Letzteres geschieht in der Regel dann, wenn sich der Aufwand für die Programmierung eines automatisierten Messablaufes nicht lohnt. Die zuvor erwähnten Kalibrierdaten werden jedoch unabhängig von dem Betriebsmodus (CNC-gesteuert oder manuell) bei der Berechnung der Raumkoordinaten des Messpunktes berücksichtigt.

Es hat sich bei der praktischen Anwendung von gattungsgemäßen Koordinatenmessgeräten nun gezeigt, dass bei Messungen, die an einem Messobjekt sowohl im CNC-Betrieb als auch manuell gesteuert durchgeführt wurden, Messwertabweichungen von nicht unerheblicher Größe auftreten können. Dies ist im Hinblick auf die Verlässlichkeit und die Genauigkeit der Messungen nachteilig.

Die bereits genannte DE 101 31 160 A1 beschreibt ein Verfahren zum Betreiben eines Koordinatenmessgerätes mit einem Dreh-Schwenk-Gelenk. In diesem Zusammenhang ist offenbart, die jeweils verwendeten Taststifte zu kalibrieren. Die Kalibrierung kann entweder manuell mit einer Joystick-Steuerung oder halbautomatisch durchgeführt werden. Bei Letzterem wird lediglich die Schaftrichtung manuell angetastet, während die Maschine automatisch drei weitere Punkte in der Nähe des manuellen Antastpunktes aufnimmt.

Aus DE 198 09 589 A1 ist ein Verfahren zum Kalibrieren eines Taststiftes bei einem Koordinatenmessgerät bekannt, wonach zumindest Teile der Oberfläche des Kalibrierkörpers kontinuierlich durch den Taster abgetastet werden.

Aus DE 196 11 617 A1 ist ein Prüfkörper für Abnahme und Überwachung von Koordinatenmessgeräten bekannt. Für den Einsatz zusammen mit diesem Prüfkörper kann eine spezielle Tasterkonfiguration vereinfacht kalibriert werden.

Aus DE 44 47 753 C2 ist es ferner bekannt, eine Kalibrierungsdatei mit optimierten Kalibrierungsdaten für den Messarm des Koordinatenmessgerätes zu erstellen. Die optimierten Kalibrierungsdaten werden beim Errechnen der Raumkoordinaten der angetasteten Messpunkte mit den erfassten Positionsdaten des Tastkopfes kombiniert.

Aus DE 43 30 873 A1 ist es ferner bekannt, unterschiedliche Parameterkombinationen speziell für eine durchzuführende Messaufgabe bzw. eingewechselte Tasterkonfiguration in Dateien zusammenzustellen. Vorgeschlagen wird insbesondere, Parameterdateien einmal für ein möglichst genaues Messen bei relativ niedrigen Antastgeschwindigkeiten und zum anderen Dateien für weniger genaues Messen bei hohen Antastgeschwindigkeiten bereitzustellen. Aus dieser Druckschrift ist es ferner bekannt, Parameterdateien den gewählten Taststiften, Tasterkonfigurationen oder für den Fall, dass ganze Tastköpfe ausgewechselt werden, den jeweiligen Tastköpfen zuzuordnen. Dabei erfolgt die Zuordnung der Dateien zum betreffenden Taststift etc. beim Kalibriervorgang.

Keine der zuvor genannten Druckschriften enthält jedoch einen Hinweis auf das oben angesprochene Problem, nämlich Messwertstreuungen oder Messwertabweichungen bei einer definierten Tastkopf/Taststiftkonfiguration abhängig von dem beim Messvorgang verwendeten Betriebsmodus. Dieses Problem ist allerdings Gegenstand einer nicht-vorveröffentlichten Anmeldung der vorliegenden Anmelderin (deutsche Patentanmeldung 102 29 824.6), wobei in dieser älteren Anmeldung ein anderer Lösungsansatz vorgeschlagen wird als nachfolgend beschrieben.

Vor diesem Hintergrund ist es eine Aufgabe der vorliegenden Erfindung, ein Verfahren und ein Koordinatenmessgerät der eingangs genannten Art anzugeben, die unabhängig von dem Betriebsmodus, in dem die Messung durchgeführt wird, eine gleichmäßig hohe Messgenauigkeit liefern.

Diese Aufgabe wird gemäß einem Aspekt der vorliegenden Erfindung durch ein Verfahren der eingangs genannten Art gelöst, mit den weiteren Schritten:
- Bereitstellen von zweiten, dem Taststift zugeordneten Kalibrierdaten, und
- Auswählen zwischen den ersten und zweiten Kalibrierdaten für die Bestimmung der Raumkoordinaten abhängig davon, ob der Tastkopf automatisiert oder manuell an die Raumposition verfahren wird.

Gemäß einem weiteren Aspekt der Erfindung wird diese Aufgabe durch ein Koordinatenmessgerät der eingangs genannten Art gelöst, bei dem der Speicher zum Aufnehmen von zweiten, dem Taststift zugeordneten Kalibrierdaten ausgebildet ist und das ferner eine Auswahleinrichtung besitzt, die abhängig von dem ersten oder zweiten Betriebsmodus entweder die ersten oder die zweiten Kalibrierdaten der Messeinrichtung bereitstellt.

Die vorliegende Erfindung beruht damit u.a. auf der Idee, für ein und denselben Taststift (allgemeiner für ein und dieselbe Gerätekonfiguration) zumindest zwei Sätze von Kalibrierdaten zur Verfügung zu stellen. Abhängig von dem Betriebsmodus, in dem eine Messung durchgeführt wird, können dann die besser geeigneten Kalibrierdaten verwendet werden. Demgegenüber wird bei gattungsgemäßen Koordinatenmessgeräten pro Tastkopf-Taststift-Konfiguration jeweils nur ein Satz Kalibrierdaten bereitgestellt. Verschiedene Sätze von Kalibrierdaten beziehen sich bei gattungsgemäßen Koordinatenmessgeräten dementsprechend immer auf unterschiedliche Tastkopf-Taststift-Konfigurationen.

Der vorliegenden Erfindung liegt die Erkenntnis zugrunde, dass das Antastverhalten eines Koordinatenmessgerätes abhängig von dem Betriebsmodus, in dem ein Messvorgang durchgeführt wird, unterschiedlich ist. Insbesondere unterscheidet sich bei messenden Tastköpfen, die beim Antasten des Messpunktes üblicherweise mit einer Vorauslenkung betrieben werden, der Signalverlauf der Tastkopfauslenkung je nachdem, ob der Tastkopf manuell oder CNC-gesteuert an den Messpunkt herangefahren wird. Da die verwendeten Tastköpfe in der Praxis nie frei von Hystereseeffekten sind, ist die jeweilige Tastkopfauslenkung von der "Vorgeschichte", die zum Antasten des Messpunktes führt, abhängig. Die unterschiedlichen Messergebnisse zwischen manuell gesteuerten und CNC-gesteuerten Messungen lassen sich daher als Folgeerscheinungen des unterschiedlichen Antastverhaltens in Kombination mit den in der Realität vorhandenen Hystereseeffekten erklären.

Durch die Bereitstellung mehrerer Kalibrierdatensätze für ein und dieselbe Tastkopf-Taststift-Konfiguration ermöglicht die vorliegende Erfindung, für jeden Antastvorgang individuell abgestimmte Kalibrierdaten zu nutzen. Dadurch kann jede Messung optimal durchgeführt werden. Anders ausgedrückt ist es auf Grund der vorliegenden Erfindung möglich, Messungen unabhängig von dem Betriebsmodus jeweils mit der maximal möglichen Genauigkeit des Koordinatenmessgerätes durchzuführen. Abweichungen der Messwerte auf Grund des Betriebsmodus sind damit auf ein Minimum reduziert.

Die genannte Aufgabe ist daher vollständig gelöst.

In einer Ausgestaltung der Erfindung werden die ersten Kalibrierdaten in einem automatisiert gesteuerten Kalibriervorgang aufgenommen.

Diese Ausgestaltung besitzt den Vorteil, dass ein optimaler Kalibrierdatensatz für den häufig verwendeten CNC-Betrieb zur Verfügung steht. CNC-gesteuerte Messungen können daher mit größtmöglicher Messgenauigkeit durchgeführt werden. Darüber hinaus ist die automatisierte Aufnahme der Kalibrierdaten vor allem bei aufwendigen Kalibriervorgängen sehr komfortabel.

In einer weiteren Ausgestaltung werden die zweiten Kalibrierdaten in einem manuell gesteuerten Kalibriervorgang aufgenommen.

Diese Ausgestaltung besitzt den Vorteil, dass optimale Kalibrierdaten auch für manuelle Messvorgänge zur Verfügung stehen. Das Antastverhalten bei manuellen Messvorgängen entspricht demjenigen des manuellen Kalibriervorgangs, so dass sich Hystereseeffekte und andere vom Bediener abhängige Einflüsse sowohl beim Kalibrieren als auch bei der späteren Messung in gleicher Weise auswirken und damit korrigiert werden. Die Messgenauigkeit wird gegenüber gattungsgemäßen Koordinatenmessgeräten für den manuellen Betriebsmodus erhöht.

Insgesamt besitzen die beiden genannten Ausgestaltungen den Vorteil, dass damit praktisch die beiden "Extremsituationen", nämlich einerseits manuelle Steuerung und andererseits vollautomatische Steuerung, in den bereitgestellten Kalibrierdatensätzen berücksichtigt sind. Zwischenlösungen, also halbautomatische Messvorgänge, können dann unter Verwendung beider Kalibrierdaten "interpoliert" werden. Alternativ hierzu ist es im Hinblick auf die Messgenauigkeit allerdings von Vorteil, wenn für jeden Betriebsmodus ein optimierter Kalibrierdatensatz aufgenommen und zur Verfügung gestellt wird.

In einer weiteren Ausgestaltung werden die Kalibrierdaten abhängig davon, ob der Tastkopf automatisiert oder manuell an die Raumposition verfahren wird, automatisiert ausgewählt. Das entsprechende Koordinatenmessgerät dieser Ausgestaltung besitzt daher eine Erkennungseinrichtung zum automatischen Erkennen des ersten oder zweiten Betriebsmodus, wobei die Erkennungseinrichtung mit der Auswahleinrichtung verbunden ist.

Diese Ausgestaltung erhöht den Bedienungskomfort und auch die Messgenauigkeit, da Bedienungsfehler (Auswählen des "falschen" Kalibrierdatensatzes) ausgeschlossen werden.

In einer anderen Ausgestaltung werden die Kalibrierdaten manuell ausgewählt. Das bevorzugte Koordinatenmessgerät dieser Ausgestaltung besitzt daher eine Eingabevorrichtung zum Auswählen zwischen den ersten und zweiten Kalibrierdaten.

Diese Ausgestaltung besitzt den Vorteil, dass der Bediener gezielten Einfluss auf die Berechnung der Raumkoordinaten nehmen kann. Durch die manuelle Auswahlmöglichkeit wird ihm die oben geschilderte Problematik zudem bewusst gemacht. Es kann für einzelne Messaufgaben von Interesse sein, die Abweichungen abhängig vom Betriebsmodus gezielt zu analysieren, beispielsweise um automatisiert aufgenommene Messreihen mit geringem Aufwand manuell nachzuvollziehen. Insgesamt gibt eine manuelle Auswahl einem versierten Gerätebediener daher eine größere Flexibilität.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Ausführungsbeispiels des neuen Koordinatenmessgerätes, und
- Fig. 2: ein vereinfachtes Flussdiagramm zur Darstellung des neuen Verfahrens.

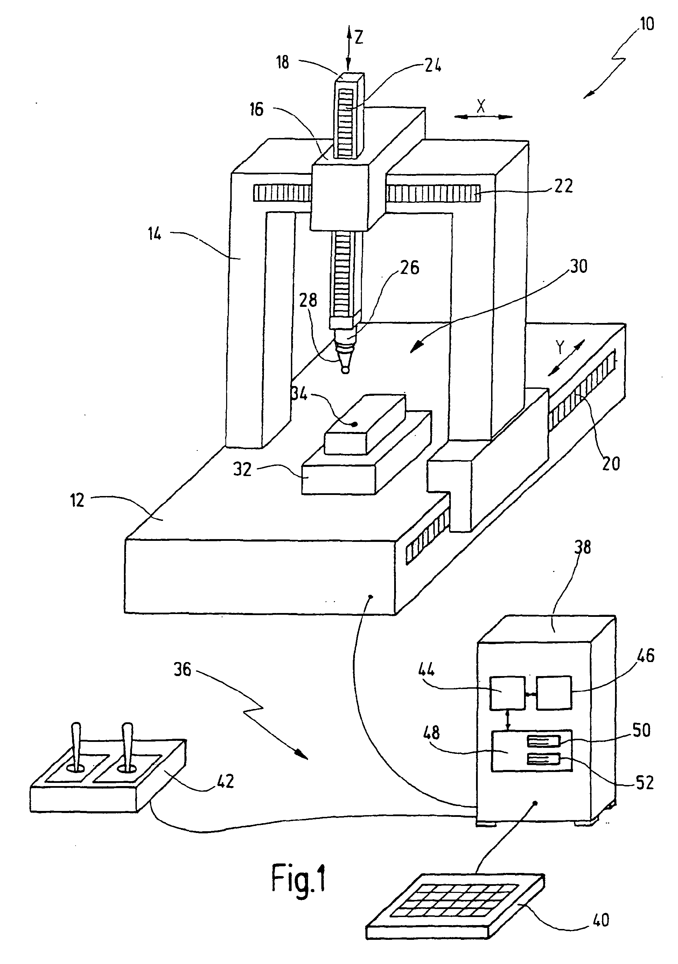

In Fig. 1 ist ein Ausführungsbeispiel des neuen Koordinatenmessgerätes in seiner Gesamtheit mit der Bezugsziffer 10 bezeichnet. Das Koordinatenmessgerät 10 ist hier beispielhaft in Portalbauweise dargestellt. Die Erfindung ist jedoch darauf nicht beschränkt und kann gleichermaßen bei Koordinatenmessgeräten in anderen Bauweisen, beispielsweise in Ständer- oder Horizontalarmbauweise, angewendet werden.

Das Koordinatenmessgerät 10 besitzt eine Grundplatte 12, auf der ein Portal 14 in einer Längsrichtung verschieblich angeordnet ist. Die Längsrichtung wird üblicherweise als y-Achse bezeichnet. Am oberen Querträger des Portals 14 ist ein in x-Richtung verschieblicher Schlitten 16 angeordnet. Der Schlitten 16 trägt eine in z-Richtung verstellbare Pinole 18. Mit den Bezugsziffern 20, 22, 24 sind schematisch dargestellte Skalen bezeichnet, an denen sich jeweils die Verstellposition des Portals 14, des Schlittens 16 und der Pinole 18 in den drei Raumrichtungen x, y und z ablesen lässt. Dabei ist der Begriff "Skalen" in verallgemeinerter Form zu verstehen. Es kann sich hier also um typische Messskalen handeln, die von einem Bediener des Koordinatenmessgerätes 10 abgelesen werden. Alternativ und/oder ergänzend handelt es sich hier jedoch um Wegmessgeber beliebiger Bauart, beispielsweise Inkrementalgeber, die maschinell ausgelesen werden können.

Am unteren freien Ende der Pinole 18 ist in an sich bekannter Weise ein Tastkopf 26 angeordnet. Der Tastkopf 26 trägt einen Taststift 28. Der Tastkopf 26 ist mit dem Taststift 28 über die Verstellmechanik des Koordinatenmessgerätes 10 (hier nicht näher gezeigte Antriebe in x-, y- und z-Richtung) innerhalb eines Messvolumens verfahrbar. Das Messvolumen ist mit der Bezugsziffer 30 bezeichnet.

Auf der Grundplatte 12 ist innerhalb des Messvolumens 30 ein Messobjekt 32 angeordnet. Bei der Bezugsziffer 34 ist ein Messpunkt bezeichnet, dessen Raumkoordinaten mit Hilfe des Koordinatenmessgerätes 10 bestimmt werden sollen. Hierzu wird der Messpunkt 34 mit dem Tastkopf 26 angefahren, bis die Tastkugel am unteren freien Ende des Taststiftes 28 den Messpunkt 34 berührt. Aus der Stellung des Tastkopfes 26, d.h. den Werten auf den drei Skalen 20, 22, 24 und - bei messenden Tastköpfen - der Auslenkung des Taststiftes 28 relativ zum Tastkopf 26 kann die Raumkoordinate in an sich bekannter Weise bestimmt werden.

Die vorliegende Erfindung wird bevorzugt bei messenden Tastköpfen angewendet. Dies sind Tastköpfe, bei denen die Auslenkung des Taststiftes 28 relativ zum Tastkopf 26 gemessen wird und dieses Messergebnis wird in die Berechnung der Raumkoordinaten einbezogen. Die Erfindung ist jedoch hierauf nicht beschränkt und kann grundsätzlich auch bei schaltenden Tastköpfen angewendet werden, bei denen die Auslenkung des Taststiftes lediglich den Messvorgang auslöst.

Mit der Bezugsziffer 36 ist eine Auswerte- und Steuereinheit bezeichnet. Die Auswerte- und Steuereinheit 36 beinhaltet einen Steuerrechner 38, an den in an sich bekannter Weise ein Eingabemedium, hier als Tastatur 40 dargestellt, sowie eine Joystickeinheit 42 angeschlossen sind. Über die Joystickeinheit 42 kann der Tastkopf 26 des Koordinatenmessgerätes 10 manuell innerhalb des Messvolumens 30 verfahren werden, wobei die einzelnen Steuerbefehle, die ein Bediener mit Hilfe der Joystickeinheit 42 erzeugt, von dem Steuerrechner 38 in an sich bekannter Weise in Signale für die hier nicht dargestellten Antriebe umgesetzt wird. Darüber hinaus kann der Steuerrechner 38 das Koordinatenmessgerät 10 in an sich bekannter Weise auch automatisiert steuern. Diese Betriebsart wird hier als CNC-Betrieb bezeichnet. Der genaue Programmablauf im CNC-Betrieb wird mit Hilfe des Eingabemediums 40 in den Steuerrechner 38 geladen. Den einschlägigen Fachleuten ist klar, dass an Stelle der hier gezeigten Tastatur auch andere Eingabemedien, insbesondere Lesegeräte für digitale Speichermedien, Verwendung finden können.

Der Steuerrechner 38 besitzt einen Prozessor 44, der die einzelnen Steuerbefehle (hier nicht dargestellt) in an sich bekannter Weise abarbeitet. Mit der Bezugsziffer 46 ist ein Festwertspeicher (ROM) bezeichnet, in dem das grundlegende Betriebsprogramm mit den Steuerbefehlen abgespeichert ist. Dieses Betriebsprogramm beinhaltet u.a. Programmteile zum Umsetzen der Steuersignale von der Joystickeinheit 42 in Steuersignale für die Antriebe des Portals 14, des Schlittens 16 und der Pinole 18. Des weiteren ist hier eine Erkennungseinrichtung implementiert, die automatisch zwischen verschiedenen Betriebsmodi des Koordinatenmessgerätes 10 (manuelle Steuerung, vollautomatischer CNC-Betrieb, ggf. halbautomatische Betriebsmodi) unterscheiden kann. Damit ist es dem Prozessor 44 möglich, abhängig vom jeweiligen Betriebsmodus einen optimalen Satz an Kalibrierdaten auszuwählen.

Mit der Bezugsziffer 48 ist ein zweiter Speicher bezeichnet, in dem verschiedene Sätze von Kalibrierdaten 50, 52 abgelegt sind. In dem bevorzugten Ausführungsbeispiel sind die Kalibrierdaten 50 im CNC-Betrieb aufgenommen, während die Kalibrierdaten 52 im manuellen Betrieb aufgenommen sind. Die Aufnahme der Kalibrierdaten erfolgt dabei in an sich bekannter Weise, insbesondere an Hand eines geeigneten Kalibrierkörpers (hier nicht dargestellt), der vor Beginn der eigentlichen Messungen in dem Messvolumen 30 angeordnet wird. Darüber hinaus können die Kalibrierdaten für eine bestimmten Taststift-Tastkopf-Konfiguration und für die verschiedenen Betriebsmodi auch beim Einwechseln eines Taststiftes von einem Speichermedium eingelesen werden.

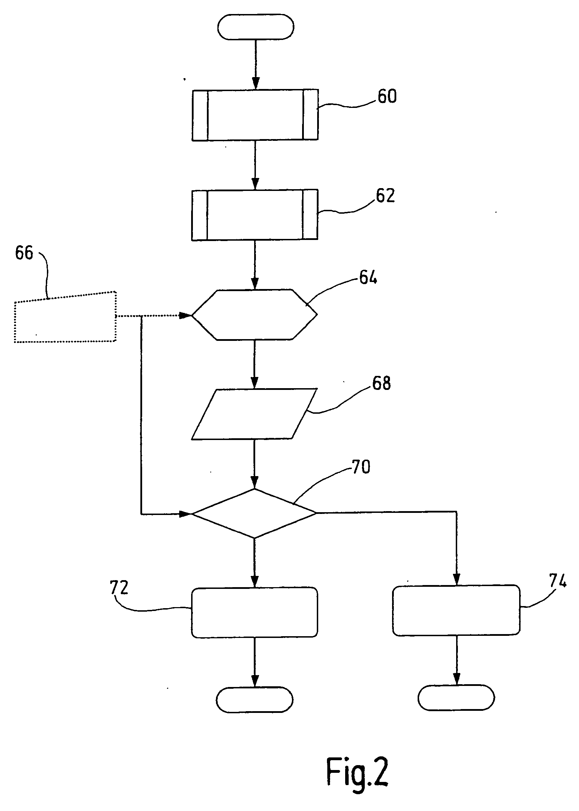

Ein bevorzugtes Messverfahren, das mit dem neuen Koordinatenmessgerät 10 ausführbar ist, ist nachfolgend an Hand Fig. 2 dargestellt.

Im Schritt 60 erfolgt zunächst die Aufnahme der ersten Kalibrierdaten im CNC-Betrieb. Wie erwähnt, wird dazu in an sich bekannter Weise ein hier nicht dargestellter Kalibrierkörper im CNC-Betrieb vermessen.

Im Schritt 62 wird die Kalibrierung anschließend manuell wiederholt. Damit stehen am Ende des Schrittes 62 sowohl manuelle als auch CNC-Kalibrierdaten für die verwendete Tastkopf-Taststift-Konfiguration zur Verfügung. Ggf. werden weitere Kalibrierdaten für weitere Betriebsmodi aufgenommen (hier nicht gezeigt). Sämtliche Kalibrierdatensätze werden in an sich bekannter Weise im Speicher 48 des Steuerrechners 38 (Fig. 1) hinterlegt. Wie den einschlägigen Fachleuten bekannt ist, kann die Aufnahme der Kalibrierdaten für eine bestimmte Tastkopf-Taststift-Konfiguration auch zeitlich getrennt von der eigentlichen Messaufgabe stattfinden. Die entsprechenden Kalibrierdaten werden dann beispielsweise nach Einwechseln des Taststiftes 28 in den Tastkopf 26 automatisch oder manuell aus einem Speicher geladen.

Mit dem Schritt 64 beginnt anschließend die Messung. Dazu wird der Tastkopf 26 mit dem Taststift 28 an das Messobjekt 32 herangefahren, bis das freie Ende des Taststiftes 28 den Messpunkt 34 berührt (siehe Fig. 1). Dieses Heranfahren kann in an sich bekannter Weise im CNC-Betrieb erfolgen oder manuell gesteuert. Letzteres ist bei der Bezugsziffer 66 als Option in punktierter Linie dargestellt. Im Schritt 68 erfolgt nach dem Antasten des Messpunktes 34 das Einlesen der aktuellen Tastkopfposition und der Werte für die Auslenkung des Taststiftes (bei messenden Tastköpfen). Aus diesen Werten wird anschließend die Raumkoordinate des angetasteten Messpunktes berechnet.

Bei dem neuen Verfahren gemäß Fig. 2 erfolgt zuvor allerdings im Schritt 70 eine Auswahl, und zwar wird hier abhängig von dem Betriebsmodus, in dem der Tastkopf 26 an das Messobjekt 32 herangefahren wurde, der geeignete Satz an Kalibrierdaten (Bezugsziffer 50, 52 in Fig. 1) ausgewählt. In den Schritten 72 bzw. 74 erfolgt dann in an sich bekannter Weise die Berechnung der Raumkoordinaten, wobei die beiden Schritte insofern alternativ zueinander sind, als dass dort jeweils die von dem Betriebsmodus abhängigen Kalibrierdaten verwendet werden. Am Ende des Schrittes 72 oder des Schrittes 74 steht dann das Messergebnis mit gleichmäßig hoher Genauigkeit und Verlässlichkeit zur Verfügung.

Die Darstellung des neuen Verfahrens in Fig. 2 ist bewusst einfach gehalten, um den Grundgedanken der vorliegenden Erfindung zu verdeutlichen. Es versteht sich jedoch, dass die praktische Realisierung auf verschiedene Arten erfolgen kann. Insbesondere können sich Unterschiede im Detail ergeben, wenn das neue Verfahren in die Betriebsprogramme vorhandener Koordinatenmessgerätetypen integriert wird. Abhängig von den Zugriffsmöglichkeiten, die ein Bediener des Koordinatenmessgerätes 10 haben soll, kann die Auswahl der Kalibrierdaten im Schritt 70 automatisch erfolgen. Grundlage ist in diesem Fall die Erkennung des jeweiligen Betriebsmodus, was auf Grund der entsprechenden Steuerung durch den Steuerrechner 38 einfach möglich ist. Alternativ hierzu kann die Auswahl der Kalibrierdaten dem Bediener des Koordinatenmessgerätes 10 auch manuell ermöglicht werden, beispielsweise durch eine geeignete Abfrage, auf die der Bediener über die Tastatur 40 antworten kann.

## Patentansprüche

1. Verfahren zum Bestimmen von Raumkoordinaten eines Messpunktes (34) an einem Messobjekt (32), mit den Schritten:
- Anordnen des Messobjekts (32) in einem Messvolumen (30),
- Verfahren eines Tastkopfes (26) in dem Messvolumen (30) an eine Raumposition,
- Antasten des Messpunktes (34) mit einem am Tastkopf (26) angeordneten Taststift (28),
- Bereitstellen von ersten, dem Taststift (28) zugeordneten Kalibrierdaten (50), und
- Bestimmen der Raumkoordinaten des Messpunktes (34) abhängig von der Raumposition des Tastkopfes (26) und abhängig von den Kalibrierdaten (50), wobei der Tastkopf (26) wahlweise automatisiert oder manuell an die Raumposition verfahren wird,
**gekennzeichnet durch** die weiteren Schritte:
- Bereitstellen von zweiten, dem Taststift (28) zugeordneten Kalibrierdaten (52), und
- Auswählen zwischen den ersten und zweiten Kalibrierdaten (50, 52) für die Bestimmung der Raumkoordinaten abhängig davon, ob der Tastkopf (26) automatisiert oder manuell an die Raumposition verfahren wird.

2. Verfahren nach Anspruch 1, **dadurch gekennzeichnet, dass** die ersten Kalibrierdaten (50) in einem automatisiert gesteuerten Kalibriervorgang aufgenommen werden.

3. Verfahren nach Anspruch 1 oder 2, **dadurch gekennzeichnet, dass** die zweiten Kalibrierdaten (52) in einem manuell gesteuerten Kalibriervorgang aufgenommen werden.

4. Verfahren nach einem der Ansprüche 1 bis 3, **dadurch gekennzeichnet, dass** die Kalibrierdaten (50, 52) abhängig davon, ob der Tastkopf (26) automatisiert oder manuell an die Raumposition verfahren wird, automatisiert ausgewählt werden.

5. Verfahren nach einem der Ansprüche 1 bis 3, **dadurch gekennzeichnet, dass** die Kalibrierdaten (50, 52) manuell ausgewählt werden.

6. Koordinatenmessgerät zum Bestimmen von Raumkoordinaten eines Messpunktes (34) an einem Messobjekt (32), das in einem Messvolumen (30) angeordnet ist, mit einem Tastkopf (26), der innerhalb des Messvolumens (30) verfahrbar ist, mit einem an dem Tastkopf (26) angeordneten Taststift (28) zum Antasten des Messpunktes (34), mit einer Steuereinrichtung (36) zum Verfahren des Tastkopfes (26) an eine Raumposition, mit einem Speicher (48) zum Abspeichern von ersten, dem Taststift (28) zugeordneten Kalibrierdaten (50), und mit einer Messeinrichtung (20, 22, 24, 38), die dazu ausgebildet ist, die Raumkoordinaten des Messpunktes (34) abhängig von der Raumposition des Tastkopfes (26) und abhängig von den Kalibrierdaten (50) zu bestimmen, wobei die Steuereinrichtung (36) wahlweise einen ersten Betriebsmodus zum automatisierten Verfahren des Tastkopfes (26) oder einen zweiten Betriebsmodus zum manuellen Verfahren des Tastkopfes (26) bereitstellt, **dadurch gekennzeichnet, dass** der Speicher (48) zum Aufnehmen von zweiten, dem Taststift (28) zugeordneten Kalibrierdaten (52) ausgebildet ist und dass ferner eine Auswahleinrichtung (44) vorhanden ist, die abhängig von dem ersten oder zweiten Betriebsmodus entweder die ersten oder die zweiten Kalibrierdaten (50, 52) der Messeinrichtung bereitstellt.

7. Koordinatenmessgerät nach Anspruch 6, **dadurch gekennzeichnet, dass** die ersten Kalibrierdaten (50) in einem automatisiert gesteuerten Kalibriervorgang aufgenommene Kalibrierdaten sind.

8. Koordinatenmessgerät nach Anspruch 6 oder 7, **dadurch gekennzeichnet, dass** die zweiten Kalibrierdaten (52) in einem manuell gesteuerten Kalibriervorgang aufgenommene Kalibrierdaten sind.

9. Koordinatenmessgerät nach einem der Ansprüche 6 bis 8, **gekennzeichnet durch** eine Erkennungseinrichtung (46) zum automatischen Erkennen des ersten oder zweiten Betriebsmodus, wobei die Erkennungseinrichtung (36) mit der Auswahleinrichtung (44) verbunden ist.

10. Koordinatenmessgerät nach einem der Ansprüche 6 bis 9, **gekennzeichnet durch** eine Eingabevorrichtung (40) zum Auswählen zwischen den ersten und zweiten Kalibrierdaten (50, 52).

## Claims

1. A method for determining spatial coordinates of a measuring point (34) on a measuring object (32), comprising the steps of:
- locating the measuring object (32) in a measuring volume (30),
- moving a probe head (26) within the measuring volume (30) to a spatial position,
- touching the measuring point (34) with a stylus (28) arranged on the probe head (26),
- providing first calibration data (50) associated with the stylus (28), and
- determining the spatial coordinates of the measuring point (34) as a function of the spatial position of the probe head (26) and as a function of the calibration data (50), wherein the probe head (26) is optionally moved to the spatial position manually or automatically,
**characterized by** the further steps of:
- providing second calibration data (52) associated with the stylus (28), and
- selecting between the first and the second calibration data (50, 52) for the determination of the spatial coordinates depending on whether the probe head (26) is automatically or manually moved to the spatial position.

2. The method according to claim 1, **characterized in that** the first calibration data (50) are recorded in an automatically controlled calibration process.

3. The method according to claim 1 or 2, **characterized in that** the second calibration data (52) are recorded in a manually controlled calibration process.

4. The method according to one of claims 1 to 3, **characterized in that** the calibration data (50, 52) are automatically selected depending on whether the probe head (26) is automatically or manually moved to the spatial position.

5. The method according to one of claims 1 to 3, **characterized in that** the calibration data (50, 52) are selected manually.

6. A coordinate measuring machine for determining spatial coordinates of a measuring point (34) on a measuring object (32) which is arranged in a measuring volume (30), comprising a probe head (26) which is movable within the measuring volume (30), comprising a stylus (28) arranged on the probe head (26) for touching the measuring point (34), comprising a control means (36) for moving the probe head (26) to a spatial position, comprising a memory (48) for storing first calibration data (50) associated with the stylus (28), and comprising a measuring means (20, 22, 24, 38) adapted to determine the spatial coordinates of the measuring point (34) as a function of the spatial position of the probe head (26) and as a function of the calibration data (50), wherein the control means (36) optionally provides a first operating mode for moving the probe head (26) automatically or a second operating mode for moving the probe head (26) manually,
**characterized in that** the memory (48) is configured to receive second calibration data (52) associated with the stylus (28), and that there is a selection means (44) which provides either the first or the second calibration data (50, 52) to the measuring means depending on the first or the second operating mode.

7. The coordinate measuring machine according to claim 6, **characterized in that** the first calibration data (50) are recorded in an automatically controlled calibration process.

8. The coordinate measuring machine according to claim 6 or 7, **characterized in that** the second calibration data are recorded in a manually controlled calibration process.

9. The coordinate measuring machine according to one of claims 6 to 8, **characterized by** a detection means (46) for automatically detecting the first or the second operating mode, wherein the detection means (36) is coupled to the selection means (44).

10. The coordinate measuring machine according to one of claims 6 to 9, **characterized by** an input device (40) for selecting between the first and the second calibration data (50, 52).

## Revendications

1. Procédé de détermination des coordonnées spatiales d'un point de mesure (34) sur un objet à mesurer (32), comportant les étapes :
- agencement de l'objet à mesurer (32) dans un volume de mesure (30),
- déplacement d'un palpeur (26) dans le volume de mesure (30) dans une position dans l'espace,
- exploration du point à mesurer (34) avec une pointe de contact (28) agencée sur le palpeur (26),
- mise à disposition de premières données de calibrage (50) associées à la pointe de contact (28), et
- détermination des coordonnées spatiales du point à mesurer (34) en fonction de la position dans l'espace du palpeur (26) et en fonction des données de calibrage (50), le palpeur (26) étant déplacé au choix de manière automatisée ou manuelle dans la position dans l'espace,
**caractérisé par** les étapes supplémentaires :
- mise à disposition de deuxièmes données de calibrage (52) associées à la pointe de contact (28), et
- sélection entre les premières et les deuxièmes données de calibrage (50, 52) pour déterminer les coordonnées spatiales en fonction du fait que le palpeur (26) est déplacé de manière automatisée ou manuelle dans la position dans l'espace.

2. Procédé selon la revendication 1, **caractérisé en ce que** les premières données de calibrage (50) sont enregistrées dans un processus de calibrage commandé de manière automatisée.

3. procédé selon la revendication 1 ou 2, **caractérisé en ce que** les deuxièmes données de calibrage (52) sont enregistrées dans un processus de calibrage commandé manuellement.

4. Procédé selon l'une quelconque des revendications 1 à 3, **caractérisé en ce que** les données de calibrage (50, 52) sont sélectionnées de manière automatisée en fonction du fait que le palpeur (26) est déplacé de manière automatisée ou manuelle dans la position dans l'espace.

5. Procédé selon l'une quelconque des revendications 1 à 3, **caractérisé en ce que** les données de calibrage (50, 52) sont sélectionnées manuellement.

6. Dispositif de mesure des coordonnées destiné à déterminer les coordonnées spatiales d'un point de mesure (34) sur un objet à mesurer (32) qui est agencé dans un volume de mesure (30), comportant un palpeur (26), qui est apte à être déplacé à l'intérieur du volume de mesure (30), une pointe de contact (28) agencée sur le palpeur (26) et destinée à explorer le point de mesure (34), une unité de commande (36) pour déplacer le palpeur (26) dans une position dans l'espace, une mémoire (48) destinée à mémoriser les premières données de calibrage (50) associées à la pointe de contact (28), et un dispositif de mesure (20, 22, 24, 38) qui est conçu pour déterminer les coordonnées spatiales du point de mesure (34) en fonction de la position dans l'espace du palpeur (26) et en fonction des données de calibrage (50), le dispositif de commande (36) mettant à disposition au choix un premier mode de fonctionnement pour le déplacement automatisé du palpeur (26) ou un deuxième mode de fonctionnement pour le déplacement manuel du palpeur (26),
**caractérisé en ce que** la mémoire (48) est conçue pour recevoir des deuxièmes données de calibrage (52) associées à la pointe de contact (28) et **en ce qu'**il est prévu, en outre, un dispositif de sélection (44) qui, en fonction du premier ou deuxième mode de fonctionnement, met à la disposition du dispositif de mesure soit les premières données de calibrage (50), soit les deuxièmes données de calibrage (52).

7. Dispositif de mesure des coordonnées selon la revendication 6, **caractérisé en ce que** les premières données de calibrage (50) sont enregistrées dans un processus de calibrage commandé de manière automatisée.

8. Dispositif de mesure des coordonnées selon la revendication 6 ou 7, **caractérisé en ce que** les deuxièmes données de calibrage (52) sont enregistrées dans un processus de calibrage commandé manuellement.

9. Dispositif de mesure des coordonnées selon l'une quelconque des revendications 6 à 8, **caractérisé par** un dispositif de détection (46) destiné à détecter automatiquement le premier et le deuxième mode de fonctionnement, le dispositif de détection (46) étant relié au dispositif de sélection (44).

10. Dispositif de mesure des coordonnées selon l'une quelconque des revendications 6 à 9, **caractérisé par** un dispositif d'entrée (40) pour choisir entre les premières et les deuxièmes données de calibrage (50, 52).
